# EUROPEAN PATENT SPECIFICATION

(11) **EP 2 233 864 B1**
(45) Date of publication and mention of the grant of the patent: **21.02.2018**
(21) Application number: 08739399.7
(22) Date of filing: 31.03.2008
(51) Int. Cl.: F25B 13/00, F25B 7/00

(54) **AIR-CONDITIONING AND HOT WATER COMPLEX SYSTEM**
LUFTKLIMATISIERUNGS- UND HEISSWASSERKOMPLEXSYSTEM
SYSTÈME COMPLEXE DE CLIMATISATION ET DE FOURNITURE D'EAU CHAUDE

(43) Date of publication of application: 29.09.2010
(73) Proprietor: Mitsubishi Electric Corporation, Chiyoda-ku Tokyo 100-8310 (JP)
(72) Inventor: YABUUCHI, Hironori, Tokyo 100-8310 (JP); KAMEYAMA, Junichi, Tokyo 100-8310 (JP); TANAKA, Kosuke, Tokyo 100-8310 (JP); AKAGI, Satoshi, Tokyo 100-8310 (JP)
(74) Representative: Pfenning, Meinig & Partner mbB
(86) International application number: PCT/JP2008/056285
(87) International publication number: WO 2009/122476

(56) References cited:
- EP-A2- 1 617 158
- JP-A- 5 149 648
- JP-A- 8 261 599
- JP-A- H05 149 648
- JP-A- H08 261 599
- JP-A- 2004 132 647
- JP-A- 2004 132 647
- JP-A- 2004 218 944
- JP-A- 2004 245 535
- JP-A- 2007 003 169
- US-A1- 2006 218 948

## Description

### TECHNICAL FIELD

The present invention relates to an air conditioning and hot water supply complex system that is equipped with a heat pump cycle and can provide a cooling load, a heating load, and a hot water supply load simultaneously.

### BACKGROUND ART

Conventionally, there are an air conditioning and hot water supply complex system that can provide a cooling load, a heating load, and a hot water supply load simultaneously by a consolidated refrigerating cycle. Proposed as such a system is "a multifunctional heat pump system including a compressor and made up of a refrigerating circuit formed by connecting the compressor, an outdoor heat exchanger, an indoor heat exchanger, a cold and heat storage tank, and a hot water supply heat exchanger, in which a flow of refrigerant is switched between the respective heat exchangers to thereby form a refrigerating cycle capable of performing a cooling and heating operation, a hot water supply operation, a heat storage operation, a cold storage operation separately and simultaneously" (see Patent Document 1, for example).

There are also air conditioning and hot water supply complex systems capable of simultaneously providing high-temperature hot water supply and indoor air conditioning functions by a binary refrigerating cycle. Proposed as such a system is "a heat pump hot water supplier in which a first compressor, a refrigerant distributing device, a first heat exchanger, a second heat exchanger, a first throttle device, an outdoor heat exchanger, a four-way valve, and the first compressor are connected in this order, the refrigerant distributing device, the four-way valve, an indoor heat exchanger, and a second throttle device are connected in this order between the second heat exchanger and the first throttle device, a low stage side refrigerant circuit through which a first refrigerant flows, a second compressor, a condenser, a third throttle device, the first heat exchanger, and the second compressor are connected in this order, and a high stage side refrigerant circuit through which a second refrigerant flows, the second heat exchanger, the condenser are connected in this order, and a hot water supply path through which supplied hot water flows is provided" (see Patent Document 2, for example).

Patent Document 1: Japanese Patent Application Laid-Open No. 11-270920 (pages 3 to 4, FIG. 1)
Patent Document 2: Japanese Patent Application Laid-Open No. 4-263758 (pages 2 to 3, FIG. 1)
JP 2004 132647 A describes a hot-water supplier which has the hot-water supplying refrigerant circuit comprising a compressor, a first heat exchanger, an expansion mechanism and a second heat exchanger, which are
   successively connected, and filled with carbon dioxide refrigerant. The first heat exchanger consists of a hot-water generating heat exchanger, the second heat exchanger consists of a cascade heat exchanger, and the hot-water supplier is unitized. The second heat exchanger is connected to the refrigerant circuit of an air conditioning device or the like to perform a binary heat pump cycle operation, whereby the frosting of the second heat exchanger is prevented.

JP H05 149648 A describes an air conditioner wherein a plurality of heat-exchangers on the outdoor side are arranged in an outdoor unit and by opening and closing throttle mechanisms on the outdoor side disposed on the liquid side, the number of heat-exchangers on the outdoor side through which refrigerant gas flows is regulated. An amount of refrigerant gas passing through the heat-exchanger on the outdoor side is regulated by means of a flow rate regulating valve located between a switch valve on the outdoor side and a delivery pipe.

US 2006/0218948 A1 discloses a cooling and heating system in which a refrigerant is used in a supercritical state and in which cooling and heating capacity can be controlled so as to maximize a coefficient of performance. A cooling and heating system includes: an outdoor unit indicating a compressor and an outdoor heat exchanger; a plurality of indoor units including indoor heat exchangers; a high pressure tube; a low pressure tube; and an intermediate tube. The system includes: a refrigerant pressure detection unit for measuring a pressure of the refrigerant discharged from the compressor; a first refrigerant temperature detection unit which measures an outlet tem perature of the refrigerant in a case where the outdoor heat exchanger functions as a gas cooler and which measures an inlet temperature of the refrigerant in a case where the outdoor heat exchanger functions as an evaporator; and a second refrigerant temperature detection unit which measures an outlet temperature of the refrigerant in a case where the indoor heat exchanger functions as a gas cooler and which measures an inlet temperature of the refrigerant in a case where the indoor heat exchanger functions as an evaporator.

### DISCLOSURE OF THE INVENTION

### PROBLEMS TO BE SOLVED BY THE INVENTION

The multifunctional heat pump system described in Patent Document 1 simultaneously provides the cooling load, the heating load, and the hot water supply load by one refrigerating cycle, i.e., a single refrigerating cycle. In this system, however, a temperature in a radiating process for heating water and a temperature in a radiating process for heating are substantially the same. Therefore, it is impossible to provide for a high-temperature hot water supply load during cooling operation and it is impossible to supply stable heat throughout the year.

The heat pump hot water supplier described in Patent Document 2 simultaneously provides the cooling load, the heating load, and the hot water supply load by a binary refrigerating cycle, i.e., two refrigerating cycles. In this system, however, the refrigerant circuit for performing air conditioning and the refrigerant circuit for performing hot water supply in an indoor unit are treated in different ways and it is impossible to simply add a hot water supply function in place of the indoor unit. Therefore, it is not easy to introduce the system into an existing air conditioner.

The present invention has been made to solve the above problems and it is an object of the invention to provide an air conditioning and hot water supply complex system capable of simultaneously treating a cooling load, a heating load, and a high-temperature hot water supply load and supplying a stable heat source throughout the year.

### MEANS FOR SOLVING THE PROBLEMS

An air conditioning and hot water supply complex system according to claim 1.

### EFFECTS OF THE INVENTION

According to the air conditioning and hot water supply complex system of the invention, it is possible to simultaneously or selectively perform the cooling operation, the heating operation, and the hot water supply operation according to the air conditioning load and the hot water supply load without forming a complicated circuit.

According to the air conditioning and hot water supply complex system of the present invention, flow rates of the air conditioning refrigerant flowing into the respective plurality of heat exchangers or plurality of divided heat exchangers are controlled to adjust the operation range of the air conditioning compressor. Therefore, it is possible to supply the stable high-temperature hot water supply load throughout the year without forming complicated circuits.

### BRIEF DESCRIPTION OF THE DRAWINGS

FIG. 1 is a refrigerant circuit diagram showing a refrigerant circuit configuration of an air conditioning and hot water supply complex system according to a first embodiment.
FIG. 2 is a schematic circuit block diagram for explaining another example of a hot water supply load.
FIG. 3 is an explanatory diagram for explaining an example of a structure of an outdoor heat exchanger.
FIG. 4 is a flowchart showing a flow of processing in adjusting an operation range of an air conditioning compressor.
FIGS. 5(a) and 5(b) are explanatory diagrams for explaining a hot water supply refrigerating cycle according to a second embodiment.
FIG. 6 is a flowchart showing a flow of processing in opening and closing a bypass solenoid valve.
FIGS. 7(a) and 7(b) are explanatory diagrams for explaining a stored hot water circulating pipe according to a third embodiment.
FIG. 8 is a schematic diagram for explaining height of a trap.

### EXPLANATION OF REFERENCE NUMERALS

1 air conditioning refrigerating cycle, 2 hot water supply refrigerating cycle, 2a hot water supply refrigerating cycle, 3 hot water supply load, 4 hot water supply water circulating cycle 4, 21 hot water supply compressor, 22 hot water supply throttle means, 31 water circulating pump, 31a heat medium circulating pump, 32 hot water storage tank, 41 refrigerant-refrigerant heat exchanger, 45 refrigerant pipe, 45a bypass pipe, 51 heat medium-refrigerant heat exchanger, 51a heat medium-refrigerant heat exchanger, 100 air conditioning and hot water supply complex system, 101 air conditioning compressor, 102 four-way valve, 103 outdoor heat exchanger, 103a divided heat exchanger, 104 accumulator, 105a check valve, 105b check valve, 105c check valve, 105d check valve, 106 high pressure side connecting pipe, 107 low pressure side connecting pipe, 108 gas-liquid separator, 109 distributing section, 109a valve means, 109b valve means, 110 distributing section, 110a check valve, 110b check valve, 111 internal heat exchanger, 112 first repeater throttle means, 113 internal heat exchanger, 114 second repeater throttle means, 115 meeting portion, 116 meeting portion, 116a meeting portion, 117 air conditioning throttle means, 118 indoor heat exchanger, 119 hot water supply heat source throttle means, 130 connecting pipe, 131 connecting pipe, 132 connecting pipe, 133 connecting pipe, 133a connecting pipe, 133b connecting pipe, 134 connecting pipe, 134a connecting pipe, 134b connecting pipe, 135 connecting pipe, 135a connecting pipe, 135b connecting pipe, 136 connecting pipe, 136a connecting pipe, 136b connecting pipe, 201 water-water heat exchanger, 202 circulating water pipe, 203 stored hot water circulating pipe, 203a stored hot water circulating pipe, 209 solenoid valve (opening and closing valve), 209a solenoid valve (bypass opening and closing valve), 210 trap, 300 bypass circuit, 309 bypass solenoid valve, A heat source unit, B cooling indoor unit, C heating indoor unit, D hot water supply heat source circuit, E repeater, a connection, b connection, c connection, d connection

### BEST MODES FOR CARRYING OUT THE INVENTION

Embodiments of the present invention will be described below based on the drawings.

### First embodiment

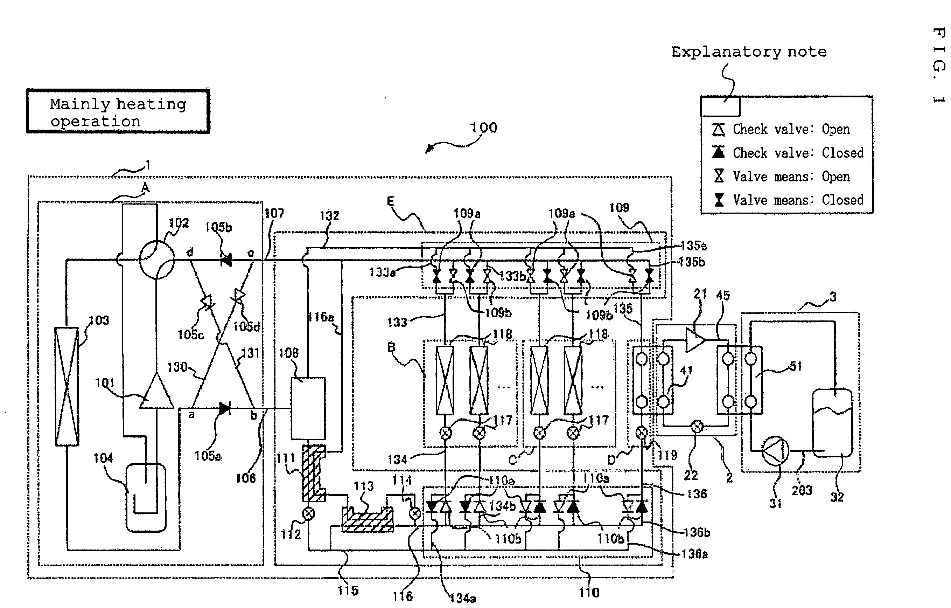

FIG. 1 is a refrigerant circuit diagram showing a refrigerant circuit configuration of an air conditioning and hot water supply complex system 100 (and especially a refrigerant circuit configuration in heating-based operation) according to a first embodiment of the invention. Based on FIG. 1, the refrigerant circuit configuration of the air conditioning and hot water supply complex system 100 and especially the refrigerant circuit configuration in the heating-based operation will be described. The air conditioning and hot water supply complex system 100 is installed in a building, an apartment house, or the like and capable of simultaneously supplying a cooling load, a heating load, and a hot water supply load by utilizing a refrigerating cycle (heat pump cycle) circulating a refrigerant (air conditioning refrigerant). In the following drawings including FIG. 1, relationships between dimensions of respective component members may be different from actual ones .

The air conditioning and hot water supply complex system 100 according to the first embodiment is made up of an air conditioning refrigerating cycle 1, a hot water supply refrigerating cycle 2, and a hot water supply load 3. Heat exchange is carried out by a refrigerant-refrigerant heat exchanger 41 between the air conditioning refrigerating cycle 1 and the hot water supply refrigerating cycle 2 and by a heat medium-refrigerant heat exchanger 51 between the hot water supply refrigerating cycle 2 and the hot water supply load 3 so that their refrigerant and water do not mix with each other. FIG. 1 shows a state (referred to as the heating-based operation for the sake of convenience) of the air conditioning refrigerating cycle 1, in which a load for a cooling indoor unit B is smaller than a total load for a heating indoor unit C and a hot water supply heat source circuit D and an outdoor heat exchanger 103 functions as an evaporator.

### [Air conditioning refrigerating cycle 1]

The air conditioning refrigerating cycle 1 is made up of a heat source unit A, a cooling indoor unit B for handling the cooling load, the heating indoor unit C for handling the heating load, the hot water supply heat source circuit D functioning as a heat source of the hot water supply refrigerating cycle 2, and a repeater E. Out of them, the cooling indoor unit B, the heating indoor unit C, and the hot water supply heat source circuit D are connected and mounted in parallel to the heat source unit A. The repeater E installed between the heat source unit A, and the cooling indoor unit B, the heating indoor unit C, and the hot water supply heat source circuit D switches a flow of the refrigerant to thereby cause the cooling indoor unit B, the heating indoor unit C, and the hot water supply heat source circuit D to perform their functions.

### [Heat source unit A]

The heat source unit A is made up of an air conditioning compressor 101, a four-way valve 102 as a flow path switching means, the outdoor heat exchanger 103, and an accumulator 104 connected in series. The heat source unit A has a function of supplying cold to the cooling indoor unit B, the heating indoor unit C, and the hot water supply heat source circuit D. It is preferable to provide, in a vicinity of the outdoor heat exchanger 103, an air blower such as a fan for supplying air to the outdoor heat exchanger 103. In the heat source unit A, a high pressure side connecting pipe 106 between the outdoor heat exchanger 103 and the repeater E is provided with a check valve 105a for allowing a flow of the air conditioning refrigerant only in a predetermined direction (the direction from the heat source unit A to the repeater E) and a low pressure side connecting pipe 107 between the four-way valve 102 and the repeater E is provided with a check valve 105b for allowing a flow of the air conditioning refrigerant only in a predetermined direction (the direction from the repeater E to the heat source unit A), respectively.

The high pressure side connecting pipe 106 and the low pressure side connecting pipe 107 are connected by a first connecting pipe 130 connecting an upstream side of the check valve 105a and an upstream side of the check valve 105b and a second connecting pipe 131 connecting a downstream side of the check valve 105a and a downstream side of the check valve 105b. In other words, a connection portion a between the high pressure side connecting pipe 106 and the first connecting pipe 130 is on an upstream side of a connection b between the high pressure side connecting pipe 106 and the second connecting pipe 131 with the check valve 105a interposed therebetween. A connection portion c between the low pressure side connecting pipe 107 and the first connecting pipe 130 is on an upstream side of a connection d between the low pressure side connecting pipe 107 and the second connecting pipe 131 with the check valve 105b interposed therebetween.

The first connecting pipe 130 is provided with a check valve 105c for allowing circulation of the air conditioning refrigerant only in a direction from the low pressure side connecting pipe 107 to the high pressure side connecting pipe 106. The second connecting pipe 131 is also provided with a check valve 105d for allowing circulation of the air conditioning refrigerant only in a direction from the low pressure side connecting pipe 107 to the high pressure side connecting pipe 106. Because FIG. 1 shows the refrigerant circuit configuration in the heating-based operation, the check valve 105a and the check valve 105b are in closed states (shown with black symbols) and the check valve 105b and the check valve 105c are in open states (shown with white symbols).

The air conditioning compressor 101 draws in the air conditioning refrigerant and compresses it to bring it into a high-temperature and high-pressure state. The four-way valve 102 switches the flow of the air conditioning refrigerant. The outdoor heat exchanger 103 functions as an evaporator or a heat radiator (condenser) and carries out heat exchange between the air supplied from the air blower (not shown) and the air conditioning refrigerant to turn the air conditioning refrigerant into evaporating gas or condensate liquid. The accumulator 104 is disposed between the four-way valve 102 and the air conditioning compressor 101 to store surplus air conditioning refrigerant in the heating-based operation. The accumulator 104 may be a vessel that can store the surplus air conditioning refrigerant.

### [Cooling indoor unit B and Heating indoor unit C]

To each of the cooling indoor unit B and the heating indoor unit C, an air conditioning throttle means 117 and an indoor heat exchangers 118 are connected in series and mounted. In the shown example, the two air conditioning throttle means 117 and the two indoor heat exchangers 118 are mounted in parallel in each of the cooling indoor unit B and the heating indoor unit C. The cooling indoor unit B receives supply of the cold from the heat source unit A and handles the cooling load and the heating indoor unit C receives supply of the cold from the heat source unit A and handles the heating load.

In other words, the first embodiment shows a state in which the repeater E determines that the cooling indoor unit B handles the cooling load and that the heating indoor unit C handles the heating load. It is preferable to provide, in a vicinity of the indoor heat exchangers 118, an air blower such as a fan for supplying air to the indoor heat exchangers 118. For the sake of convenience, connecting pipes from the repeater E and connected to the indoor heat exchanger 118 are referred to as connecting pipes 133 and connecting pipes from the repeater E and connected to the air conditioning throttle means 117 are referred to as connecting pipes 134.

The air conditioning throttle means 117 function as decompression valves and expansion valves to decompress and expand the air conditioning refrigerant. Each of the air conditioning throttle means 117 may be made up of a means an opening degree of which can be variably controlled, e.g., a precision flow rate control means formed of an electronic expansion valve and an inexpensive refrigerant flow rate adjusting means such as a capillary. The indoor heat exchanger 118 function as heat radiators (condensers) and evaporators to carry out heat exchange between the air supplied from the air blower (not shown) and the air conditioning refrigerant to turn the air conditioning refrigerant into condensate liquid or evaporating gas. The air conditioning throttle means 117 and the indoor heat exchanger 118 are connected in series.

### [Hot water supply heat source circuit D]

The hot water supply heat source circuit D is formed by connecting a hot water supply heat source throttle means 119 and the refrigerant-refrigerant heat exchanger 41 in series and has a function of supplying the cold from the heat source unit A to the hot water supply refrigerating cycle 2 via the refrigerant-refrigerant heat exchanger 41. In other words, the air conditioning refrigerating cycle 1 and the hot water supply refrigerating cycle 2 are cascade-connected by the refrigerant-refrigerant heat exchanger 41. For the sake of convenience, a connecting pipe from the repeater E and connected to the refrigerant-refrigerant heat exchanger 41 is referred to as a connecting pipe 135 and a connecting pipe from the repeater E and connected to the hot water supply heat source throttle means 119 is referred to as a connecting pipe 136.

The hot water supply heat source throttle means 119 functions as a decompression valve and an expansion valve similarly to the air conditioning throttle means 117 and decompresses and expands the air conditioning refrigerant. The hot water supply heat source throttle means 119 may be made up of a means an opening degree of which can be variably controlled, e.g., a precision flow rate control means formed of an electronic expansion valve and an inexpensive refrigerant flow rate adjusting means such as a capillary. The refrigerant-refrigerant heat exchanger 41 functions as the heat radiator (condenser) and the evaporator and carries out heat exchange between the hot water supply refrigerant circulating in the refrigerating cycle of the hot water supply refrigerating cycle 2 and the air conditioning refrigerant circulating in the refrigerating cycle of the air conditioning refrigerating cycle 1.

### [Repeater E]

The repeater E has a function of connecting each of the cooling indoor unit B, the heating indoor unit C, and the hot water supply heat source circuit D to the heat source unit A and a function of determining whether the indoor heat exchangers 118 serve as the heat radiators or the evaporators and whether the refrigerant-refrigerant heat exchanger 41 serves as a water cooler or a hot water supplier by opening or closing either one of a valve means 109a or a valve means 109b of a first distributing section 109. The repeater E is made up of a gas-liquid separator 108, a first distributing section 109, a second distributing section 110, a first internal heat exchanger 111, a first repeater throttle means 112, a second internal heat exchanger 113, and a second repeater throttle means 114.

In the first distributing section 109, the connecting pipes 133 and the connecting pipe 135 are divided into two pipes, ones of which (connecting pipes 133b and a connecting pipe 135b) are connected to the low pressure side connecting pipe 107 and the others (connecting pipes 133a and a connecting pipe 135a) are connected to a connecting pipe (referred to as a connecting pipe 132) connected to the gas-liquid separator 108. In the first distributing section 109, the connecting pipes 133a and the connecting pipe 135a are provided with the valve means 109a that are controlled to open or close to let or not to let the refrigerant through and the connecting pipes 133b and the connecting pipe 135b are provided with the valve means 109b that are controlled to open or close to let or not to let the refrigerant through. Open and closed states of the valve means 109a and the valve means 109b are shown by white symbols (open states) and black symbols (closed states).

In the second distributing section 110, the connecting pipes 134 and the connecting pipe 136 are divided into two pipes, ones of which (connecting pipes 134a and a connecting pipe 136a) are connected by a first meeting portion 115 and the others (connecting pipes 134b and a connecting pipe 136b) are connected by a second meeting portion 116. In the second distributing section 110, the connecting pipes 134a and the connecting pipe 136a are provided with check valves 110a for allowing flows of the refrigerant only in one direction and the connecting pipes 134b and the connecting pipe 136b are provided with check valves 110b for allowing flows of the refrigerant only in one direction, respectively. Open and closed states of the check valves 110a and the check valves 110b are shown by white symbols (open states) and black symbols (closed states).

The first meeting portion 115 extends from the second distributing section 110 and is connected to the gas-liquid separator 108 via the first repeater throttle means 112 and the first internal heat exchanger 111. The second meeting portion 116 is divided into two between the second distributing section 110 and the second internal heat exchanger 113, one of which is connected to the first meeting portion 115 between the second distributing section 110 and the first repeater throttle means 112 via the second internal heat exchanger 113 and the other (the second meeting portion 116a) is connected to the low pressure side connecting pipe 107 via the second repeater throttle means 114, the second internal heat exchanger 113, and the first internal heat exchanger 111.

The gas-liquid separator 108 separates the air conditioning refrigerant into a gas refrigerant and a liquid refrigerant and is provided in the high pressure side connecting pipe 106. One end of the gas-liquid separator 108 is connected to the valve means 109a of the first distributing section 109 and the other end is connected to the second distributing section 110 via the first meeting portion 115. The first distributing section 109 has a function of allowing the air conditioning refrigerant to flow into the indoor heat exchangers 118 and the refrigerant-refrigerant heat exchanger 41 as either the valve means 109a or the valve means 109b are opened or closed. The second distributing section 110 has a function of allowing flows of the air conditioning refrigerant in one direction with the check valves 110a and the check valves 110b.

The first internal heat exchanger 111 is provided to the first meeting portion 115 between the gas-liquid separator 108 and the first repeater throttle means 112 and carries out heat exchange between the air conditioning refrigerant passing through the first meeting portion 115 and the air conditioning refrigerant passing through the second meeting portion 116a branching off the second meeting portion 116. The first repeater throttle means 112 is provided to the first meeting portion 115 between the first internal heat exchanger 111 and the second distributing section 110 and decompresses and expands the air conditioning refrigerant. The first repeater throttle means 112 may be made up of a means an opening degree of which can be variably controlled, e.g., a precision flow rate control means formed of an electronic expansion valve and an inexpensive refrigerant flow rate adjusting means such as a capillary.

The second internal heat exchanger 113 is provided to the second meeting portion 116 and carries out heat exchange between the air conditioning refrigerant passing through the second meeting portion 116 and the air conditioning refrigerant passing through the second meeting portion 116a branching off the second meeting portion 116. The second repeater throttle means 114 is provided to the second meeting portion 116 between the second internal heat exchanger 113 and the second distributing section 110 and functions as a decompression valve and an expansion valve to decompress and expand the air conditioning refrigerant. Similarly to the first repeater throttle means 112, the second repeater throttle means 114 may be made up of a means an opening degree of which can be variably controlled, e.g., a precision flow rate control means formed of an electronic expansion valve and an inexpensive refrigerant flow rate adjusting means such as a capillary.

As described above, the air conditioning refrigerating cycle 1 is formed by connecting the air conditioning compressor 101, the four-way valve 102, the indoor heat exchanger 118, the air conditioning throttle means 117, and the outdoor heat exchanger 103 in series, connecting the air conditioning compressor 101, the four-way valve 102, the refrigerant-refrigerant heat exchanger 41, the hot water supply heat source throttle means 119, and the outdoor heat exchanger 103 in series, connecting the indoor heat exchanger 118 and the refrigerant-refrigerant heat exchanger 41 in parallel through the repeater E to form the first refrigerant circuit, and circulating the air conditioning refrigerant through the first refrigerant circuit.

The air conditioning compressor 101 may be any type of compressor that can compress the drawn-in refrigerant into a high-pressure state. For example, various types such as reciprocating, rotary, scroll, and screw types may be used to form the air conditioning compressor 101. The air conditioning compressor 101 may be formed as a type a rotation number of which can be variably controlled by an inverter or as a type a rotation of which is fixed. The kind of the refrigerant circulating through the air conditioning refrigerating cycle 1 is not especially limited. For example, any of a natural refrigerant such as carbon dioxide (CO₂), hydrocarbon, and helium, an alternative refrigerant such as HFC410A, HFC407C, and HFC404A not including chlorine, and a fluorocarbon refrigerant such as R22 and R134a used for existing products may be used.

Here, operation of the heating-based operation of the air conditioning refrigerating cycle 1 will be described.

First, the air conditioning refrigerant brought into the high-temperature and high-pressure state by the air conditioning compressor 101 is discharged from the air conditioning compressor 101, passes through the four-way valve 102 and the check valve 105c, is introduced into the high pressure side connecting pipe 106, and flows into the gas-liquid separator 108 of the repeater E in a state of superheated gas. The air conditioning refrigerant flowing into the gas-liquid separator 108 in the state of superheated gas is distributed to circuits through the open valve means 109a in the first distributing section 109. Here, the air conditioning refrigerant in the state of the superheated gas flows into the heating indoor unit C and the hot water supply heat source circuit D.

Flows of the air conditioning refrigerant flowing into the heating indoor unit C radiate heat (i.e., warms up indoor air) at the indoor heat exchangers 118, are decompressed by the air conditioning throttle means 117, and join at the first meeting portion 115. The air conditioning refrigerant flowing into the hot water supply heat source circuit D radiates heat (i.e., gives heat to the hot water supply refrigerating cycle 2) at the refrigerant-refrigerant heat exchanger 41, is decompressed by the hot water supply heat source throttle means 119, and joins the air conditioning refrigerant flowing out of the heating indoor unit C at the first meeting portion 115. On the other hand, part of the air conditioning refrigerant flowing into the gas-liquid separator 108 in the state of superheated gas, at the first internal heat exchanger 111, with the air conditioning refrigerant expanded into a low-temperature and low-pressure state by the second repeater throttle means 114 to thereby obtain a supercooling degree.

Then, the air conditioning refrigerant passes through the first repeater throttle means 112 and joins the air conditioning refrigerant used for air conditioning (the air conditioning refrigerant that has flowed into the heating indoor unit C and the hot water supply heat source circuit D and radiated heat at the indoor heat exchangers 118 and the refrigerant-refrigerant heat exchanger 41) at the first meeting portion 115. The first repeater throttle means 112 may be fully closed so that no air conditioning refrigerant in the state of the superheated gas passes through the first repeater throttle means 112. Then, in the second internal heat exchanger 113, the air conditioning refrigerant exchanges heat exchanges heat with the air conditioning refrigerant that has expanded into the low-temperature and low-pressure state at the second repeater throttle means 114 to thereby obtain a supercooling degree. This air conditioning refrigerant is distributed to the second meeting portion 116 and the second repeater throttle means 114.

The air conditioning refrigerant passing through the second meeting portion 116 is distributed into the circuits where the valve means 109b are open. Here, the air conditioning refrigerant passing through the second meeting portion 116 flows into the cooling indoor unit B. The flows of the air conditioning refrigerant are expanded into low-temperature and low-pressure states by the air conditioning throttle means 117, evaporate in the indoor heat exchangers 118, pass through the valve means 109b, and join in the low pressure side connecting pipe 107. On the other hand, the air conditioning refrigerant that has passed through the second repeater throttle means 114 exchanges heat in the second internal heat exchanger 113 and the first internal heat exchanger 111 to evaporate and joins, in the low pressure side connecting pipe 107, the air conditioning refrigerant flowing out of the cooling indoor unit B. The air conditioning refrigerant joined in the low pressure side connecting pipe 107 is introduced to the outdoor heat exchanger 103 via the check valve 105d, evaporates remaining liquid refrigerant depending on operating conditions, passes through the four-way valve 102 and the accumulator 104, and returns to the air conditioning compressor 101.

### [Hot water supply refrigerating cycle 2]

The hot water supply refrigerating cycle 2 is made up of a hot water supply compressor 21, the heat medium-refrigerant heat exchanger 51, a hot water supply throttle means 22, and the refrigerant-refrigerant heat exchanger 41. In other words, the hot water supply refrigerating cycle 2 is formed by connecting the hot water supply compressor 21, the heat medium-refrigerant heat exchanger 51, the hot water supply throttle means 22, and the refrigerant-refrigerant heat exchanger 41 in series by a refrigerant pipe 45 to form a second refrigerant circuit and circulating a hot water supply refrigerant through the second refrigerant circuit. Operation of the hot water supply refrigerating cycle 2 does not change depending on an operating state of the air conditioning refrigerating cycle 1, i.e., whether cooling-based operation or the heating-based operation is carried out.

The hot water supply compressor 21 draws in the hot water supply refrigerant and compresses the hot water supply refrigerant to bring it into a high-temperature and high-pressure state. The hot water supply compressor 21 may be of a type a rotation number of which can be variably controlled by an inverter or a type a rotation number of which is fixed. The hot water supply compressor 21 can be of any type if it can compress the drawn-in refrigerant into the high-pressure state. Various types such as reciprocating, rotary, scroll, and screw types may be used to form the hot water supply compressor 21.

The heat medium-refrigerant heat exchanger 51 carries out heat exchange between water (heat medium) circulating through the hot water supply load 3 and the hot water supply refrigerant circulating through the hot water supply refrigerating cycle 2. In other words, the hot water supply refrigerating cycle 2 and the hot water supply load 3 are cascade-connected by the heat medium-refrigerant heat exchanger 51. The hot water supply throttle means 22 functions as a decompression valve and an expansion valve and decompresses and expands the hot water supply refrigerant. The hot water supply throttle means 22 may be made up of a means an opening degree of which can be variably controlled, e.g., a precision flow rate control means formed of an electronic expansion valve and an inexpensive refrigerant flow rate adjusting means such as a capillary.

The refrigerant-refrigerant heat exchanger 41 carries out heat exchange between the hot water supply refrigerant circulating through the hot water supply refrigerating cycle 2 and the air conditioning refrigerant circulating through the air conditioning refrigerating cycle 1. The kind of the refrigerant circulating through the hot water supply refrigerating cycle 2 is not especially limited. For example, any of the natural refrigerant such as carbon dioxide, hydrocarbon, and helium, the alternative refrigerant such as HFC410A, HFC407C, and HFC404A not including chlorine, and the fluorocarbon refrigerant such as R22 and R134a used for existing products may be used.

Here, operation of the hot water supply refrigerating cycle 2 will be described.

First, the hot water supply refrigerant brought into the high-temperature and high-pressure state by the hot water supply compressor 21 is discharged from the hot water supply compressor 21 and flows into the heat medium-refrigerant heat exchanger 51. In the heat medium-refrigerant heat exchanger 51, the flowing-in hot water supply refrigerant heats water circulating through the hot water supply load 3 to thereby radiate heat. The hot water supply refrigerant is expanded by the hot water supply throttle means 22 to a temperature not higher than an exit temperature of the refrigerant-refrigerant heat exchanger 41 in the hot water supply heat source circuit D in the air conditioning refrigerating cycle 1. The expanded hot water supply refrigerant receives heat, in the refrigerant-refrigerant heat exchanger 41, from the air conditioning refrigerant flowing through the hot water supply heat source circuit D forming the air conditioning refrigerating cycle 1, evaporates, and returns to the hot water supply compressor 21.

### [Hot water supply load 3]

The hot water supply load 3 is made up of a water circulating pump 31, the heat medium-refrigerant heat exchanger 51, and a hot water storage tank 32. In other words, the hot water supply load 3 is formed by connecting the water circulating pump 31, the heat medium-refrigerant heat exchanger 51, and the hot water storage tank 32 in series by a stored hot water circulating pipe 203 to form a water circuit (heat medium circuit) and circulating hot water supply water through the water circuit. Operation of the hot water supply load 3 does not change depending on the operating state of the air conditioning refrigerating cycle 1, i.e., whether the cooling-based operation or the heating-based operation is carried out. The stored hot water circulating pipe 203 forming the water circuit is made up of a copper pipe, a stainless pipe, a steel pipe, a vinyl chloride pipe, and the like.

The water circulating pump 31 draws in the water stored in the hot water storage tank 32, pressurizes the water, and circulates it through the hot water supply load 3 and may be of a type a rotation number of which is controlled by an inverter, for example. As described above, the heat medium-refrigerant heat exchanger 51 carries out heat exchange between the water (heat medium) circulating through the hot water supply load 3 and the hot water supply refrigerant circulating through the hot water supply refrigerating cycle 2. The hot water storage tank 32 is for storing the water heated by the heat medium-refrigerant heat exchanger 51.

First, relatively low-temperature water stored in the hot water storage tank 32 is pumped up from a bottom portion of the hot water storage tank 32 and pressurized by the water circulating pump 31. The water pressurized by the water circulating pump 31 flows into the heat medium-refrigerant heat exchanger 51 and receives heat from the hot water supply refrigerant circulating through the hot water supply refrigerating cycle 2 at the heat medium-refrigerant heat exchanger 51. In other words, the water that flowed into the heat medium-refrigerant heat exchanger 51 is boiled by the hot water supply refrigerant circulating through the hot water supply refrigerating cycle 2 and a temperature of the water increases. Then, the boiled water returns to a relatively high-temperature upper portion of the hot water storage tank 32 and is stored in the hot water storage tank 32.

Because the air conditioning refrigerating cycle 1 and the hot water supply refrigerating cycle 2 are formed as refrigerant circuit configurations (the first refrigerant circuit forming the air conditioning refrigerating cycle 1 and the second refrigerant circuit forming the hot water supply refrigerating cycle 2) independent of each other as described above, the same kind or different kinds of refrigerant may be circulated through the respective refrigerant circuits. In other words, the refrigerants in the respective refrigerant circuits flow and exchange heat with each other at the refrigerant-refrigerant heat exchanger 41 and the heat medium-refrigerant heat exchanger 51 without mixing with each other.

If a refrigerant having a low critical temperature is used as the hot water supply refrigerant, the hot water supply refrigerant in the heat radiating process at the heat medium-refrigerant heat exchanger 51 is expected to come into a supercritical state in supplying high-temperature hot water. However, in general, if the refrigerant in the heat radiating process is in the supercritical state, a COP changes a lot due to changes in the heat radiator pressure and the heat radiator exit temperature. Therefore, advanced control is required to carry out operation for obtaining the high COP. On the other hand, in general, the refrigerant having the low critical temperature has higher saturation pressure for the same temperature and therefore it is necessary to increase wall thickness of the pipe and the compressor, which causes an increase in cost.

Considering that recommended temperature of water stored in the hot water storage tank 32 for keeping away Legionella bacteria and the like from developing is not lower than 60°°C, a minimum target temperature of hot water supply is expected to be 60°°C in many cases. With the above circumstances in view, the refrigerant having the minimum critical temperature of 60°C is employed as the hot water supply refrigerant. If such a refrigerant is employed as the hot water supply refrigerant in the hot water supply refrigerating cycle 2, it is possible to more stably obtain the higher COP at lower cost. If the refrigerant is constantly used around the critical temperature, the inside of the refrigerant circuit is expected to become high-temperature and high pressure. Therefore, if a compressor of a type using a high-pressure shell is employed as the hot water supply compressor 21, it is possible to achieve stable operation.

Although the surplus refrigerant is stored in the receiver (accumulator 104) in the air conditioning refrigerating cycle 1 in the shown example, it is not the absolute necessity. If the surplus refrigerant is stored in the heat exchanger serving as the heat radiator in the refrigerating cycle, the accumulator 104 may be removed. Although two or more cooling indoor units B and the heating indoor units C are connected in the example shown in FIG. 1, the numbers of units to be connected are not especially limited. For example, it is essential only that one or more cooling indoor units B without the heating indoor unit C or with one or more heating indoor units C be connected. Capacities of the respective indoor units forming the air conditioning refrigerating cycle 1 may be the same or may vary from a large capacity to a small one.

As described above, the hot water supply load system is made up of a binary cycle in the air conditioning and hot water supply complex system 100 according to the first embodiment. Therefore, to meet a high-temperature hot water supply demand (e.g., 80°C), it is essential only that the temperature of the heat radiator in the hot water supply refrigerating cycle 2 be high (e.g., the condensation temperature of 85°C) and it is unnecessary to increase the condensation temperature (e.g., 50°C) of the heating indoor unit C as well when there is a heating load, which conserves energy. If there is a demand for high-temperature hot water supply during air conditioning cooling operation in summer, a boiler or the like needs to be used to meet the demand in prior art. However, heat that has been conventionally emitted into the atmosphere can be recovered and used again to supply hot water, which substantially increases the system COP and conserves energy.

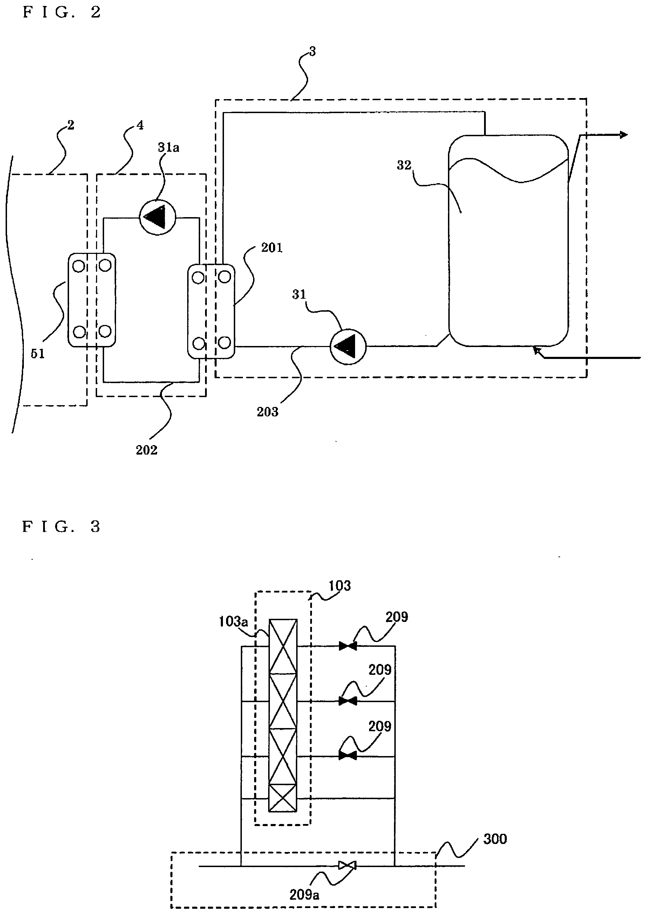

FIG. 2 is a schematic circuit block diagram for explaining another example of the hot water supply load 3. Based on FIG. 2, an example of an arrangement having another form of hot water supply load 3 and heating circulating water will be described. As shown in FIG. 2, between the hot water supply refrigerating cycle 2 and the hot water supply load 3, a hot water supply water circulating cycle (hot water supply heat medium circulating cycle) 4 is cascade-connected through a heat medium-refrigerant heat exchanger 51 and a water-water heat exchanger (heat medium-heat medium heat exchanger) 201. In the example shown in FIG. 1, water is directly warmed by the heat medium-refrigerant heat exchanger 51 in the hot water supply load 3 formed as a closed circuit. On the other hand, in the example shown in FIG. 2, the hot water supply load 3 formed as an open circuit has the hot water supply water circulating cycle 4 between the hot water supply refrigerating cycle 2 and itself and water is indirectly warmed by the water-water heat exchanger 201.

### [Hot water supply water circulating cycle 4]

The hot water supply water circulating cycle 4 is made up of a heat medium circulating pump 31a, the heat medium-refrigerant heat exchanger 51, and the water-water heat exchanger 201. In other words, the hot water supply water circulating cycle 4 is formed by connecting the heat medium circulating pump 31a, the heat medium-refrigerant heat exchanger 51, and the water-water heat exchanger 201 in series by a circulating water pipe 202 to form a water circuit (heat medium circuit) and circulating warming heat medium (warming water) through the heat medium circuit (water circuit). The circulating water pipe 202 forming the water circuit is made up of a copper pipe, a stainless pipe, a steel pipe, a vinyl chloride pipe, and the like.

The heat medium circulating pump 31a draws in water (heat medium) passing through the circulating water pipe 202, pressurizes the water, and circulates it through the hot water supply water circulating cycle 4 and may be of a type a rotation number of which is controlled by an inverter, for example. The heat medium-refrigerant heat exchanger 51 carries out heat exchange between the water circulating through the hot water supply water circulating cycle 4 and the hot water supply refrigerant circulating through the hot water supply refrigerating cycle 2. The water-water heat exchanger 201 carries out heat exchange between the water circulating through the hot water supply water circulating cycle 4 and the water circulating through the hot water supply load 3. Although the water is circulated through the hot water supply water circulating cycle 4 in the example explained here, other fluid such as brine (antifreeze liquid) may be circulated as the heat medium.

First, the relatively low-temperature water stored in the hot water storage tank 32 is pumped up from the bottom portion of the hot water storage tank 32 and pressurized by the water circulating pump 31. The water pressurized by the water circulating pump 31 flows into the water-water heat exchanger 201 and receives, at the water-water heat exchanger 201, heat from the water circulating through the hot water supply water circulating cycle 4. In other words, the water that flowed into the water-water heat exchanger 201 is boiled by the water circulating through the hot water supply water circulating cycle 4 and a temperature of the water increases. Then, the boiled water returns to a relatively high-temperature upper portion of the hot water storage tank 32 and is stored in the hot water storage tank 32. In other words, heat from the hot water supply refrigerating cycle 2 is transmitted to the hot water supply water circulating cycle 4 at the heat medium-refrigerant heat exchanger 51 and to the hot water supply load 3 at the water-water heat exchanger 201, respectively.

FIG. 3 is an explanatory diagram for explaining an example of a structure of an outdoor heat exchanger 103. Based on FIG. 3, the outdoor heat exchanger 103 that can perform heating operation throughout the year will be described. If the air conditioning and hot water supply complex system 100 is used only for normal air conditioning, heating operation is generally carried out at an outside-air wet-bulb temperature not higher than 15°C. To carry out the hot water supply operation, however, it is necessary to carry out the hot water supply operation irrespective of the outside-air temperature. Therefore, FIG. 3 shows an example in which the outdoor heat exchanger 103 has a divided structure having, inside itself, a plurality of heat exchangers (hereafter referred to as divided heat exchangers 103a). The outdoor heat exchanger 103 may be a divided structure formed by combining four heat exchangers or may be a divided structure formed by dividing one heat exchanger into four.

As shown in FIG. 3, the high pressure side connecting pipe 106 is divided into a plurality of pipes and connected to the respective divided heat exchangers 103a forming the outdoor heat exchanger 103. The respective divided pipes of the high pressure side connecting pipe 106 are provided with solenoid valves 209 that are opening and closing valves controlled to open or close to allow or not allow passage of the refrigerant. One of the plurality of divided pipes of the high pressure side connecting pipe 106 is formed as a bypass circuit 300 bypassing the divided heat exchangers 103a. The bypass circuit 300 is also provided with the solenoid valve 209a that is a bypass opening and closing valve. In other words, in the outdoor heat exchanger 103 forming the air conditioning refrigerating cycle 1, an amount of incoming refrigerant can be adjusted by controlling opening and closing of the solenoid valve 209 and the solenoid valve 209a and a capacity of the heat exchanger can be divided.

If the outside-air wet-bulb temperature increases, i.e., if a suction temperature of the air conditioning compressor 101 is expected to increase beyond an operation range (15°C at the maximum, in general), it is preferable to reduce heat exchanger performance of the outdoor heat exchanger 103. Therefore, in the air conditioning and hot water supply complex system 100, all or part of the solenoid valves 209 are controlled to close to interrupt the refrigerant flowing into the outdoor heat exchanger 103 so that the operation range of the air conditioning compressor 101 is not exceeded. In other words, by determining the number of divided heat exchangers 103a into which the refrigerant flows according to the operation range of the air conditioning compressor 101 and controlling the corresponding number of solenoid valves 209 for closing, the amount of incoming refrigerant is adjusted so that the operation range of the air conditioning compressor 101 is not exceeded.

However, even if the heat exchanger performance of the outdoor heat exchanger 103 is reduced by controlling the solenoid valves 209 to close them, the operation range of the air conditioning compressor 101 may be deviated in some cases. In such cases, it is preferable to return the refrigerant to the air conditioning compressor 101 without allowing it to flow into the outdoor heat exchanger 103. For this purpose, the solenoid valve 209a installed in the bypass circuit 300 is controlled for opening and the refrigerant is returned to a suction side of the air conditioning compressor 101 without allowing the refrigerant to flow into the outdoor heat exchanger 103. In this way, increase in evaporation temperature can be prevented and operation can be carried out while preventing deviation from the operation range of the air conditioning compressor 101.

The solenoid valve 209a installed in the bypass circuit 300 is selected so as to satisfy an expression Cva<CVb, where Cva is a flow rate coefficient of the refrigerant passing through the outdoor heat exchanger 103 and Cvb is a flow rate coefficient of the refrigerant passing through the bypass circuit 300. Moreover, if the operation range of the air conditioning compressor 101 cannot be maintained by division of the heat exchanger capacity, the operation range is maintained by opening the solenoid valve 209a installed in the bypass circuit 300 to allow the refrigerant to bypass. The divided structure may be controlled not by the solenoid valves but by electronic expansion valves.

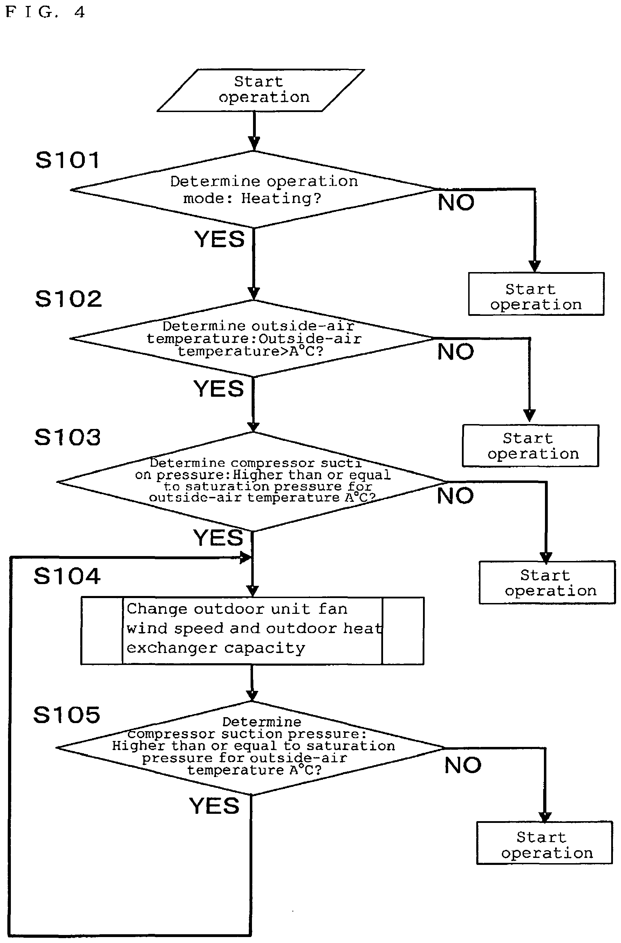

FIG. 4 is a flowchart showing a flow of processing in adjusting the operation range of the air conditioning compressor 101. Based on FIG. 4, the processing in adjusting the operation range of the air conditioning compressor 101 described in FIG. 3 will be described in detail. As described above, if the air conditioning and hot water supply complex system 100 is used only for the normal air conditioning, the heating operation need not be carried out when the outside-air temperature is relatively high (e.g., 15°C or higher) and is generally carried out at the outside-air wet-bulb temperature of -20°C to 15.5°C. If the air conditioning and hot water supply complex system 100 carries out the hot water supply operation, however, it is necessary to carry out the hot water supply operation irrespective of the outside-air temperature.

First, if the air conditioning and hot water supply complex system 100 starts operation, whether or not a present operation mode is heating operation is determined (step S101) . If the operation mode is the cooling operation (step S101; NO), the cooling operation is continued without special control, because the operation range of the air conditioning compressor 101 is not exceeded. If the operation mode is the heating operation (step S101; YES), on the other hand, whether or not the outside-air temperature is higher than a predetermined temperature A°C is determined (step S102). Then, if the outside-air temperature is A°C or lower (step S102; NO), the operation range of the air conditioning compressor 101 is not exceeded and therefore the heating operation is continued without special control.

If the outside-air temperature is higher than A°C (step S102; YES), on the other hand, whether or not pressure of the refrigerant drawn into the air conditioning compressor 101 is pressure not lower than a predetermined acceptable value, i.e., saturation pressure for A°C is determined (step S103) . If the suction pressure is not higher than the saturation pressure for A°C (step S103; NO), the operation range of the air conditioning compressor 101 is not exceeded and therefore the heating operation is continued without special control. If the suction pressure is pressure not lower than the saturation pressure for A°C (step S103; YES), on the other hand, it is highly likely that the operation range of the air conditioning compressor 101 is exceeded and therefore control is carried out to reduce a rotation number of the air blowing means such as the fan provided in the vicinity of the outdoor heat exchanger 103 and to determine the number of solenoid valves 209 to be closed (step S104).

In other words, by reducing the heat exchanger performance of the outdoor heat exchanger 103, the suction pressure to the air conditioning compressor 101 is prevented from exceeding the acceptable value and the operation range of the air conditioning compressor 101 is adjusted. Then, whether or not the suction pressure to the air conditioning compressor 101 is the pressure not lower than the saturation pressure for the predetermined temperature A°C is determined again (step S105). When the suction pressure becomes pressure not higher than the saturation pressure (step S105; NO), it is determined that the operation range of the air conditioning compressor 101 is not exceeded and therefore the heating operation is continued with the air blowing means and the solenoid valves 209 under control. On the other hand, if the suction pressure is still pressure not lower than the saturation pressure (step S105; YES), there is still a possibility that the operation range of the air conditioning compressor 101 is exceeded and therefore control is carried out to further reduce the rotation number of the air blowing means and increase the number of solenoid valves 209 to be closed (step S104).

In a normal operating state, the predetermined temperature A°C is generally determined according to the air conditioning compressor 101 to be used. The normal air conditioning compressor 101 has limit values for the suction pressure and discharge pressure. During the heating operation, the outdoor heat exchanger 103 normally functions as the evaporator. When the outdoor heat exchanger 103 is functioning as the evaporator, the suction pressure of the air conditioning compressor 101 is substantially similar to the saturation pressure calculated from the outside-air wet-bulb temperature. Although the operation range of the air conditioning compressor 101 is determined based on the outside-air temperature, it may be determined based on a case in which the air blowing means near the outdoor heat exchanger 103 is rotating at the lowest speed for a few minutes or a case in which the air conditioning compressor 101 is rotating at the lowest speed for a few minutes. The time "a few minutes" mentioned here is equal to an outdoor unit control timing or a moment.

The determination and control of the respective devices based on the flowchart are performed by a controller (not shown) made up of a microcomputer or the like. This controller may be provided to any of the heat source unit A, the repeater E, the cooling indoor unit B, the heating indoor unit C, and the hot water supply heat source circuit D. Moreover, a low pressure detecting means such as a pressure sensor for detecting the pressure of the refrigerant drawn into the air conditioning compressor 101 is preferably provided in the suction side pipe connected to the air conditioning compressor 101. The number of divided heat exchangers 103a forming the outdoor heat exchanger 103, i.e., the division number of the outdoor heat exchanger 103 is not especially limited.

### Second embodiment

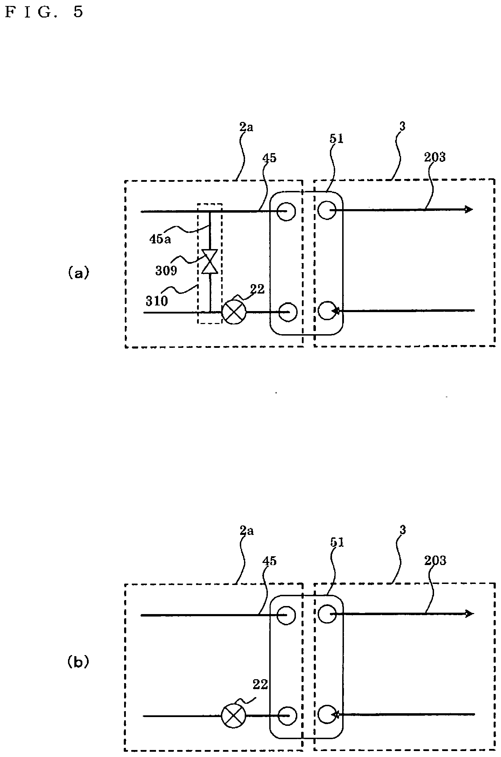

FIGS. 5(a) and 5(b) are explanatory diagrams for explaining a hot water supply refrigerating cycle 2a according to an second embodiment of the invention. Based on FIG. 5, the hot water supply refrigerating cycle 2a characterizing the second embodiment will be described. FIG. 5(a) is an enlarged view of a portion of the hot water supply refrigerating cycle 2a and FIG. 5(b) is an enlarged view of a portion of the hot water supply refrigerating cycle 2 as a comparative example. The hot water supply refrigerating cycle 2a is different from the hot water supply refrigerating cycle 2 in that the refrigerant pipe 45 is divided between the hot water supply compressor 21 and the heat medium-refrigerant heat exchanger 51 and that a bypass pipe 45a connected between the hot water supply throttle means 22 and the refrigerant-refrigerant heat exchanger 41 is provided to form a bypass circuit 310. A bypass solenoid valve 309 is installed in the bypass pipe 45a.

As described above, the heat medium-refrigerant heat exchanger 51 carries out heat exchange between the refrigerant circulating through the hot water supply refrigerating cycle 2 and the heat medium such as water circulating through the hot water supply load 3. When the heating operation is carried out in the air conditioning and hot water supply complex system 100, the operation mode may change to defrosting operation depending on the outside-air temperature in some cases. If the operation mode changes to the defrosting operation, a low-pressure refrigerant at 0°C or a lower temperature may flow into the heat medium-refrigerant heat exchanger 51a. If the operation mode changes to the defrosting operation and the low-pressure refrigerant at 0°C or a lower temperature flows into the heat medium-refrigerant heat exchanger 51 according to the first embodiment, it may circulate through the hot water supply load 3 to freeze water retained in the heat medium-refrigerant heat exchanger 51.

Therefore, by adding the bypass pipe 45a to the hot water supply refrigerating cycle 2a and controlling the bypass solenoid valve 309 installed in the bypass pipe 45a from a closed state into an open state, it is possible to prevent the low-pressure refrigerant from flowing into the heat medium-refrigerant heat exchanger 51, even if the operation mode changes to the defrosting operation. As a result, by allowing the low-pressure refrigerant to flow into the bypass circuit 310 during the defrosting operation, an acute change in temperature is not caused in the hot water supply load 3 and it is possible to supply the stable heat source. Moreover, by allowing the low-pressure refrigerant to bypass through the bypass pipe 45a, it is possible to prevent the water retained in the heat medium-refrigerant heat exchanger 51 from freezing to thereby avoid breakage of the heat medium-refrigerant heat exchanger 51. Not the bypass solenoid valve 309 but an electronic expansion valve or a mechanical expansion valve may be used to allow the low-pressure refrigerant to bypass.

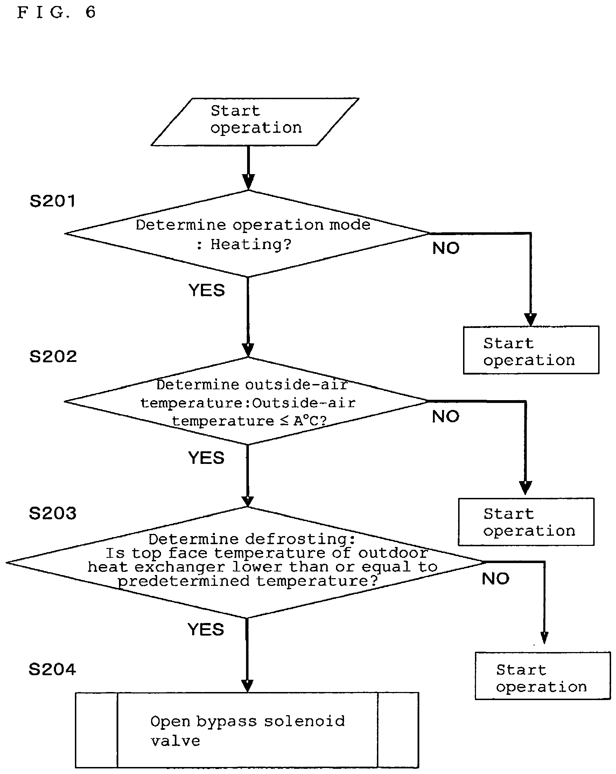

FIG. 6 is a flowchart showing a flow of processing in opening and closing the bypass solenoid valve 309. Based on FIG. 6, processing for controlling opening and closing of the bypass solenoid valve 309 to allow the refrigerant to pass through the bypass pipe 45a will be described in detail. As described above, when the heating operation is carried out in the air conditioning and hot water supply complex system 100, the operation mode may change to the defrosting operation in some cases depending on the outside-air temperature. In such cases, the air conditioning and hot water supply complex system 100 can carry out the defrosting operation by controlling the four-way valve 102 to achieve the similar flow of refrigerant to that in the cooling operation.

First, if the air conditioning and hot water supply complex system 100 starts operation, whether or not the present operation mode is the heating mode is determined (step S201) . If the operation mode is the cooling operation (step S201; NO), the defrosting operation is not carried out and the refrigerant need not pass thorough the bypass pipe 45a. Therefore, the bypass solenoid valve 309 is closed and the cooling operation is continued. If the operation mode is the heating operation (step S201; YES), on the other hand, whether or not the outside-air temperature is a temperature not higher than the predetermined temperature A°C is determined (step S202). If the outside-air temperature is higher than A°C (step S202; NO), the defrosting operation is not carried out and the refrigerant need not pass thorough the bypass pipe 45a. Therefore, the bypass solenoid valve 309 is closed and the heating operation is continued.

If the outside-air temperature is not higher than A°C (step S202; YES), on the other hand, necessity for the defrosting operation is determined based on whether or not a surface temperature of the outdoor heat exchanger 103 is not higher than a predetermined temperature (step S203). If the defrosting operation is unnecessary, i.e., if the surface temperature of the outdoor heat exchanger 103 is higher than the predetermined temperature (step S203; NO), it is unnecessary to allow the refrigerant to pass through the bypass pipe 45a and therefore the bypass solenoid valve 309 is closed and the heating operation is continued. On the other hand, if the defrosting operation is necessary, i.e., the surface temperature of the outdoor heat exchanger 103 is not higher than the predetermined temperature (step S203; YES), the defrosting operation is carried out and the bypass solenoid valve 309 is controlled for opening to allow the refrigerant to flow through the bypass pipe 45a (step S204).

Determination based on the flowchart and control of the respective devices are carried out by the controller similarly to FIG. 4. It is preferable that a temperature detecting means such as a temperature sensor for detecting the surface temperature of the outdoor heat exchanger 103 is provided on or near a surface of the outdoor heat exchanger 103. The bypass solenoid valve 309 is opened not only when the defrosting operation starts. For example, if a flowing direction of the refrigerant is reversed, e.g., when the mode is switched from the heating operation to the cooling operation, the low-temperature refrigerant flows into the heat medium-refrigerant heat exchanger 51 and therefore the bypass solenoid valve 309 may be opened to allow the refrigerant to flow into the bypass pipe 45a. In this case, however, it is preferable that the operation is started after adjusting a flow rate of the refrigerant so as to avoid an abrupt change in the refrigerant in the bypass pipe 45a circuit.

### Third embodiment

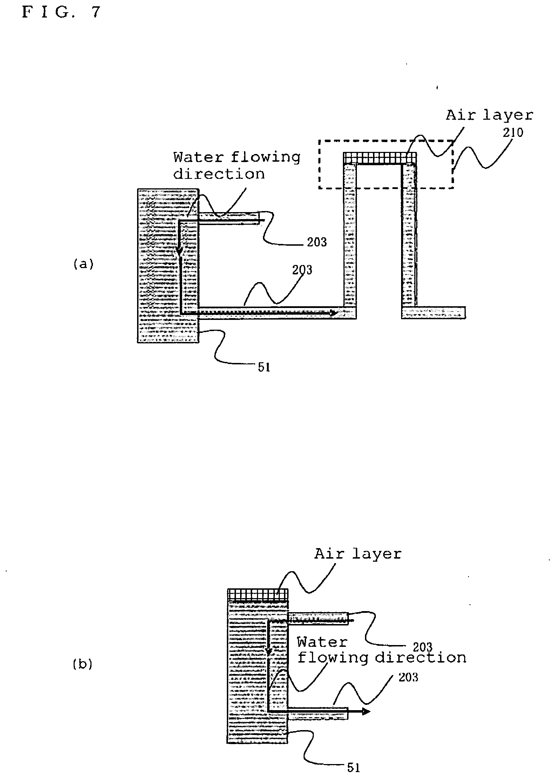

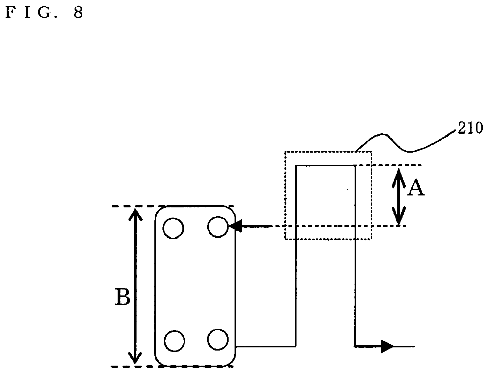

FIGS. 7(a) and 7(b) are explanatory diagrams for explaining a stored hot water circulating pipe 203a according to a third embodiment of the invention. FIG. 8 is a schematic diagram for explaining height of a trap 210. Based on FIGS. 7(a) to 8, the stored hot water circulating pipe 203a characterizing the third embodiment will be described. FIGS. 7(a) is an enlarged view of a portion of the stored hot water circulating pipe 203a and FIG. 7(b) is an enlarged view of a portion of a stored hot water circulating pipe 203 as a comparative example. The stored hot water circulating pipe 203a is different from the stored hot water circulating pipe 203 in that it forms the trap 210.

To install the stored hot water circulating pipe 203 according to the first and second embodiments, it is common practice to directly connect pipes to water side inlet and outlet of the heat medium-refrigerant heat exchanger 51 as shown in FIG. 7(b). As a result, when fluid flows in a direction of an arrow, an air layer builds up in an upper portion of the heat medium-refrigerant heat exchanger 51. If the air layer builds up in the upper portion of the heat medium-refrigerant heat exchanger 51, scale adheres to that portion and it is highly possible that life of the heat medium-refrigerant heat exchanger 51 is shortened.

Therefore, the trap 210 is formed in the stored hot water circulating pipe 203a forming the hot water supply load 3 to prevent the air layer from building up in the upper portion of the heat medium-refrigerant heat exchanger 51. The trap 210 is formed by placing part of the stored hot water circulating pipe 203a on the exit side of the heat medium-refrigerant heat exchanger 51 in a higher position than the stored hot water circulating pipe 203a on the entrance side of the heat medium-refrigerant heat exchanger 51 by A mm. If the trap 210 is formed in the stored hot water circulating pipe 203a in this way, it is possible to allow the air layer to build up in the trap 210 and the air layer does not build up in the upper portion of the heat medium-refrigerant heat exchanger 51.

As a result, when the system is used in a high-hardness water environment, it is possible to prevent the air from building up in the heat medium-refrigerant heat exchanger 51 in advance to thereby prevent adhesion of scale and extend the life of the heat medium-refrigerant heat exchanger 51. The air building up in the trap 210 can be discharged outside by maximizing the flow rate of the water circulating pump 31. If the air is discharged at one time when the pipe is installed, the air does not build up in the trap 210 and the scale does not adhere to an inside of the stored hot water circulating pipe 203a.

An air bleeding valve or the like may be provided in the portion where the trap 210 is formed to remove the air building up in the trap 210. As shown in FIG. 8, if the height of the trap 210 is A (mm) and height of the heat medium-refrigerant heat exchanger is B (mm), the height A of the trap 210 is not lower than 0 mm and not higher than the height B of the heat medium-refrigerant heat exchanger 51. However, if the water circulating pump 31 is selected in consideration of the height A of the trap 210, the height A of the trap 210 is not especially limited.

## Claims

1. An air conditioning and hot water supply complex system comprising:
an air conditioning refrigerating cycle (1) including a first refrigerant circuit and circulating an air conditioning refrigerant through the first refrigerant circuit, the first refrigerant circuit being formed by connecting an air conditioning compressor (101), a flow path switching means (102), an outdoor heat exchanger (103), an indoor heat exchanger (118), and an air conditioning throttle means (117) in series, connecting a refrigerant-refrigerant heat exchanger (41) and a hot water supply heat source throttle means (119) in series, and connecting the refrigerant-refrigerant heat exchanger (41) and the hot water supply heat source throttle means (119) to the indoor heat exchanger (118) and the air conditioning throttle means (117) in parallel;
a hot water supply refrigerating cycle (2) including a second refrigerant circuit and circulating a hot water supply refrigerant through the second refrigerant circuit, the second refrigerant circuit being formed by connecting a hot water supply compressor (21), a heat medium-refrigerant heat exchanger (51), a hot water supply throttle means (22), and the refrigerant-refrigerant heat exchanger (41) in series; and
a hot water supply load (3) including a water circuit and circulating hot water supply water through the water circuit, the water circuit being formed by connecting a water circulating pump (31), the heat medium-refrigerant heat exchanger (51), and a hot water storage tank (32) in series,
wherein the air conditioning refrigerating cycle (1) and the hot water supply refrigerating cycle (2) are cascade-connected so that the air conditioning refrigerant and the hot water supply refrigerant exchange heat in the refrigerant-refrigerant heat exchanger (41),
the hot water supply refrigerating cycle (2) and the hot water supply load (3) are cascade-connected so that the hot water supply refrigerant and the water exchange heat in the heat medium-refrigerant heat exchanger (51), **characterized in that** the outdoor heat exchanger (103) is made up of a plurality of heat exchangers (103a) or divided into a plurality of heat exchangers (103a),
opening and closing valves (209) are provided to each of refrigerant pipes connected to the plurality of heat exchangers (103a) or the plurality of divided heat exchangers (103a),
the opening and closing valves (209) are opened or closed to control flow rates of the air conditioning refrigerant flowing into the respective heat exchangers (103a) to adjust an operation range of the air conditioning compressor (101), and **in that** where a present operation mode is a heating operation and a hot water supply operation is carried out, when an outside-air temperature is higher than a predetermined temperature and a pressure of an air conditioning refrigerant drawn into the air conditioning compressor (101) is not lower than a saturation pressure of the predetermined temperature, a number of the opening and closing valves (209) to be closed is determined, flow rates of the air conditioning refrigerant flowing into the respective heat exchangers is controlled, and the operation range of the air conditioning compressor is adjusted.

2. The air conditioning and hot water supply complex system of claim 1,
wherein, when pressure of the refrigerant sucked into the air conditioning compressor (101) is not lower than a preset acceptable value, the opening and closing valves (209) are controlled so that the pressure of the refrigerant sucked into the air conditioning compressor (101) does not exceed the acceptable value.

3. The air conditioning and hot water supply complex system of claim 1 or 2,
wherein at least one of the refrigerant pipes is formed as a bypass circuit (300) bypassing the outdoor heat exchanger (103) and is provided with a bypass opening and closing valve (209a), and
the bypass opening and closing valve (209a) is opened or closed to allow the air conditioning refrigerant to flow into the bypass circuit (300) to thereby adjust the operation range of the air conditioning compressor (101).

4. The air conditioning and hot water supply complex system of any one of claims 1 to 3,
wherein a hot water supply heat medium circulating cycle (4) including a heat medium circuit and circulating a heat medium for warming through the heat medium circuit is provided between the hot water supply refrigerating cycle (2) and the hot water supply load (3), the heat medium circuit being formed by connecting a heat medium circulating pump (31a), the heat medium-refrigerant heat exchanger (51), and a heat medium-heat medium heat exchanger (201) in series,
the hot water supply refrigerating cycle (2) and the hot water supply heat medium circulating cycle (4) are cascade-connected so that the hot water supply refrigerant and the heat medium exchange heat in the heat medium-refrigerant heat exchanger (51), and,
the hot water supply heat medium circulating cycle (4) and the hot water supply load (3) are cascade-connected so that the heat medium and the water exchange heat in the heat medium-heat medium heat exchanger (201).

5. The air conditioning and hot water supply complex system of any one of claims 1 to 4, wherein a refrigerant having a critical temperature not lower than 60°C is employed for the hot water supply refrigerant.

## Patentansprüche

1. Klimatisierungs- und Heißwasserversorgungs-Anlagen-System aufweisend:
einen Klimatisierungs-Kältekreislauf (1), der einen ersten Kältemittelkreislauf enthält, und ein Klimatisierungs-Kältemittel durch den ersten Kältemittelkreislauf zirkulieren lässt, wobei der erste Kältemittelkreislauf durch Verbinden eines Klimatisierungs-Kompressors (101), eines Flussweg-Umschaltmittels (102), eines Außen-Wärmetauschers (103), eines Innen-Wärmetauschers (118), und eines Klimatisierungs-Drosselungsmittels (117) in Serie, Verbinden eines Kältemittel-Kältemittel-Wärmetauschers (41) und eines Heißwasser-Wärmequellen-Drosselungsmittels (119) in Serie, und Verbinden des Kältemittel-Kältemittel-Wärmetauschers (41) und des Heißwasserversorgungs-Wärmequellen-Drosselungsmittels (119) mit dem InnenWärmetauscher (118) und dem Klimatisierungs-Drosselungsmittel (117) parallel gebildet wird;
ein Heißwasserversorgungs-Kältekreislauf (2), der einen zweiten Kältemittelkreislauf enthält, und ein Heißwasserversorgungs-Kältemittel durch den zweiten Kältemittelkreislauf zirkuliert, wobei der zweite Kältemittelkreislauf durch Verbinden eines Heißwasserversorgungs-Kompressors (21), eines Wärmemedium-Kältemittel-Wärmetauschers (51), eines Heißwasserversorgungs-Drosselungsmittels (22) und des Kältemittel-Kältemittel-Wärmetauschers (41) in Serie gebildet wird; und
eine Heißwasserversorgungslast (3), die einen Wasserkreislauf enthält, und Heißwasserversorgungwasser durch den Wasserkreislauf zirkuliert, wobei der Wasserkreislauf durch Verbinden einer Wasser-Zirkulationspumpe (31), des Wärmemedium-Kältemittel-Wärmetauschers (51), und eines Heißwasser-Speichertanks (32) in Serie gebildet wird,
wobei der Klimatisierungs-Kältekreislauf (1) und der Heißwasserversorgungs-Kältekreislauf (2) Kaskaden-verbunden sind, so dass das Klimatisierungs-Kältemittel und das Heißwasserversorgungs-Kältemittel Wärme in dem Kältemittel-Kältemittel-Wärmetauscher (41) austauschen,
der Heißwasserversorgungs-Kältekreislauf (2) und die Heißwasserversorgungslast (3) Kaskaden-verbunden sind, so dass das Heißwasserversorgungs-Kältemittel und das Wasser Wärme in dem Wärmemedium-Kältemittel-Wärmetauscher (51) austauschen,
**gekennzeichnet dadurch, dass**
der Außen-Wärmetauscher (103) aus einer Vielzahl von Wärmetauschern (103a) zusammengesetzt, oder in eine Vielzahl von Wärmetauschern (103a) unterteilt ist,
Öffnungs- und Verschlussventile (209) zu jeder von Kältemittel-Leitungen, die mit der Vielzahl von Wärmetauschern (103a) oder der Vielzahl von unterteilten Wärmetauschern (103a) verbunden sind, bereitgestellt sind,
die Öffnungs- und Verschlussventile (209) geöffnet oder verschlossen sind, um Flussraten des Klimatisierungs-Kältemittels zu steuern, das in die jeweiligen Wärmetauscher (103a) fließt, um einen Betriebsbereich des Klimatisierungs-Kompressors (101) anzupassen,
und dadurch, dass wo
ein vorliegender Betriebsmodus ein Heizbetrieb ist, und ein Heißwasserversorgungsbetrieb ausgeführt wird, wenn eine AußenluftTemperatur höher ist als eine vorherbestimmte Temperatur und ein Druck eines in den Klimatisierungs-Kompressor (101) eingezogenen Klimatisierungs-Kältemittels nicht niedriger ist, als ein Sättigungsdruck der vorherbestimmten Temperatur, eine Anzahl der zu schließenden Öffnungs- und Verschlussventile (209) bestimmt ist, Flussraten des in die jeweiligen Wärmetauscher fließenden Klimatisierungs-Kältemittels gesteuert ist, und der Betriebsbereich des Klimatisierungs-Kompressors angepasst ist.

2. Klimatisierungs- und Heißwasserversorgungs-Anlagen-System nach Anspruch 1,
wobei, wenn Druck des in den Klimatisierungs-Kompressor (101) hinein gesaugten Kältemittels nicht niedriger ist, als ein voreingestellter annehmbarer Wert, die Öffnungs- und Verschlussventile (209) gesteuert sind, so dass der Druck des in den Klimatisierungs-Kompressor (101) hineingesaugten Kältemittels den annehmbaren Wert nicht übersteigt.

3. Klimatisierungs- und Heißwasserversorgungs-Anlagen-System nach Anspruch 1 oder 2,
wobei zumindest eine der Kältemittel-Leitungen als ein Umleitungs-Kreislauf (300), der den Außen-Wärmetauscher (103) umgeht, ausgebildet ist, und mit einem Umleitungs-Öffnungs- und - Verschlussventil (209a) bereitgestellt ist, und
das Umleitungs-Öffnungs- und -Verschlussventil (209a) geöffnet oder geschlossen wird, um es dem Klimatisierungs-Kältemittel zu erlauben, in den Umleitungs-Kreislauf (300) hineinzufließen, um dadurch den Betriebsbereich der Klimatisierungs-Kompressors (101) anzupassen.

4. Klimatisierungs- und Heißwasserversorgungs-Anlagen-System nach einem der Ansprüche 1 bis 3,
wobei ein Heißwasserversorgungs-Wärmemedium-Zirkulationskreislauf (4), der einen Wärmemedium-Kreislauf enthält, und ein Wärmemedium zum Erhitzen durch den Wärmemedium-Kreislauf zirkuliert, zwischen dem Heißwasserversorgungs-Kältekreislauf (2) und der Heißwasserversorgungslast (3) bereitgestellt ist, wobei der Wärmemedium-Kreislauf durch Verbinden einer Wärmemedium-Zirkulationspumpe (31a), des Wärmemedium-Kältemittel-Wärmetauschers (51) und eines Wärmemedium-Wärmemedium-Wärmetauschers (201) in Serie gebildet wird,
der Heißwasserversorgungs-Kältekreislauf (2) und der Heißwasserversorgungs-Wärmemedium-Zirkulationskreislauf (4) Kaskaden-verbunden sind, so dass das Heißwasserversorgungs-Kältemittel und das Wärmemedium Wärme in dem Wärmemedium-Kältemittel-Wärmetauscher (51) austauschen, und
der Heißwasserversorgungs-Wärmemedium-Zirkulationskreislauf (4) und die Heißwasserversorgungslast (3) Kaskaden-verbunden sind, so dass das Wärmemedium und das Wasser Wärme in dem Wärmemedium-Wärmemedium-Wärmetauscher (201) austauschen.

5. Klimatisierungs- und Heißwasserversorgungs-Anlagen-System nach einem der Ansprüche 1 bis 4, wobei ein Kältemittel, das eine kritische Temperatur nicht niedriger als 60°C aufweist, für das Heißwasserversorgungs-Kältemittel benutzt wird.

## Revendications

1. Système complexe de climatisation et de fourniture d'eau chaude comprenant :
un cycle de réfrigération de climatisation (1) qui comprend un premier circuit de fluide frigorigène et qui fait circuler un fluide frigorigène de climatisation à travers le premier circuit de fluide frigorigène, le premier circuit de fluide frigorigène étant formé en connectant en série un compresseur de climatisation (101), des moyens de commutation du chemin de circulation (102), un échangeur de chaleur extérieur (103), un échangeur de chaleur intérieur (118), et des moyens de régulation de climatisation (117), en connectant en série un échangeur de chaleur entre fluide frigorigène et fluide frigorigène (41), et des moyens de régulation de source de chaleur de fourniture d'eau chaude (119), et en connectant en parallèle l'échangeur de chaleur entre fluide frigorigène et fluide frigorigène (41) et les moyens de régulation de source de chaleur de fourniture d'eau chaude (119) à l'échangeur chaleur intérieur (118) et les moyens de régulation de climatisation (117) ;
un cycle de réfrigération de fourniture d'eau chaude (2) qui comprend un second circuit de fluide frigorigène et qui fait circuler un fluide frigorigène de fourniture d'eau chaude à travers le second circuit de fluide frigorigène , le second circuit de fluide frigorigène étant formé en connectant en série un compresseur de fourniture d'eau chaude (21), un échangeur de chaleur entre milieu thermique et fluide frigorigène (51), des moyens de régulation de fourniture d'eau chaude (22), et l'échangeur de chaleur entre fluide frigorigène et fluide frigorigène (41) ; et
une charge de fourniture d'eau chaude (3) qui comprend un circuit de l'eau et qui fait circuler une eau de fourniture d'eau chaude à travers le circuit de l'eau, le circuit de l'eau étant formé en connectant en série une pompe de circulation de l'eau (31), l'échangeur de chaleur entre milieu thermique et fluide frigorigène (51), et un réservoir de stockage de l'eau chaude (32) ;
dans lequel le cycle de réfrigération de climatisation (1) et le cycle de réfrigération de fourniture d'eau chaude (2), sont connectés en cascade de telle sorte que le fluide frigorigène de climatisation et le fluide frigorigène de fourniture d'eau chaude, échangent la chaleur dans l'échangeur de chaleur entre fluide frigorigène et fluide frigorigène (41) ;
le cycle de réfrigération de fourniture d'eau chaude (2) et la charge de fourniture d'eau chaude (3), sont connectés en cascade de telle sorte que le fluide frigorigène de fourniture d'eau chaude et l'eau, échangent la chaleur dans l'échangeur de chaleur entre milieu thermique et fluide frigorigène (51), **caractérisé en ce que** :
l'échangeur de chaleur extérieur (103) se compose d'une pluralité d'échangeurs de chaleur (103a), ou est réparti en une pluralité d'échangeurs de chaleur (103a) ;
des soupapes d'ouverture et de fermeture (209) sont fournies à chacune des canalisations de fluide frigorigène connectées à la pluralité d'échangeurs de chaleur (103a), ou à la pluralité d'échangeurs de chaleur répartis (103a) ;
les soupapes d'ouverture et de fermeture (209) sont ouvertes ou fermées de façon à commander le débit du fluide frigorigène de climatisation qui circule dans les échangeurs de chaleur respectifs (103a), de façon à régler la plage de fonctionnement du compresseur de climatisation (101) ;
et **en ce que**, lorsque le mode de fonctionnement actuel est une opération de chauffage et quand une opération de fourniture d'eau chaude est exécutée, lorsque la température de l'air extérieur est supérieure à une température prédéterminée, et lorsque la pression du fluide frigorigène de climatisation qui pénètre dans le compresseur de climatisation (101) n'est pas inférieure à la pression de saturation de la température prédéterminée, un certain nombre de soupapes d'ouverture et de fermeture (209) à fermer est déterminé, les débits du fluide frigorigène de climatisation qui circule dans les échangeurs de chaleur respectifs est commandé, et la plage de fonctionnement du compresseur de climatisation est réglée.

2. Système complexe de climatisation et de fourniture d'eau chaude selon la revendication 1,
dans lequel, lorsque la pression du fluide frigorigène aspiré dans le compresseur de climatisation (101) n'est pas inférieure à une valeur acceptable préréglée, les soupapes d'ouverture et de fermeture (209) sont commandées de telle sorte que la pression du fluide frigorigène aspiré dans le compresseur de climatisation (101) ne dépasse pas la valeur acceptable.

3. Système complexe de climatisation et de fourniture d'eau chaude selon la revendication 1 ou la revendication 2,
dans lequel l'une au moins des canalisations de fluide frigorigène est formée en tant que circuit de dérivation (300) qui court-circuite l'échangeur de chaleur extérieur (103), et est dotée d'une soupape d'ouverture et de fermeture de dérivation (209a) ; et
la soupape d'ouverture et de fermeture de dérivation (209a) est ouverte ou fermée de façon à permettre au fluide frigorigène de climatisation de circuler dans le circuit de dérivation (300) de manière à régler de ce fait la plage de fonctionnement du compresseur de climatisation (101).

4. Système complexe de climatisation et de fourniture d'eau chaude selon l'une quelconque des revendications 1 à 3,
dans lequel un cycle de circulation du milieu thermique de fourniture d'eau chaude (4) qui comprend un circuit de milieu thermique et qui fait circuler un milieu thermique destiné à chauffer par l'intermédiaire du circuit de milieu thermique, est fourni entre le cycle de réfrigération de fourniture d'eau chaude (2) et la charge de fourniture d'eau chaude (3) ;
le circuit de milieu thermique étant formé en connectant en série une pompe de circulation de milieu thermique (31a), l'échangeur de chaleur entre milieu thermique et fluide frigorigène (51), et un échangeur de chaleur entre milieu thermique et milieu thermique (201) ;
le cycle de réfrigération de fourniture d'eau chaude (2) et le cycle de circulation du milieu thermique de fourniture d'eau chaude (4), sont connectés en cascade de telle sorte que le fluide frigorigène de fourniture d'eau chaude et le milieu thermique, échangent la chaleur dans l'échangeur de chaleur entre milieu thermique et fluide frigorigène (51) ; et
le cycle de circulation du milieu thermique de fourniture d'eau chaude (4) et la charge de fourniture d'eau chaude (3), sont connectés en cascade de telle sorte que le milieu thermique et l'eau échangent la chaleur dans l'échangeur de chaleur entre milieu thermique et milieu thermique (201).

5. Système complexe de climatisation et de fourniture d'eau chaude selon l'une quelconque des revendications 1 à 4, dans lequel un fluide frigorigène qui présente une température critique non inférieure à 60 °C est utilisé en tant que fluide frigorigène de fourniture d'eau chaude.
